# EUROPEAN PATENT APPLICATION

(11) **EP 0 997 264 A1**
(43) Date of publication of application: **03.05.2000**
(21) Application number: 99120931.3
(22) Date of filing: 02.11.1999
(51) Int. Cl.: B32B 1/00, B32B 27/00, A47B 77/02

(54) **Extruded decorative article and method of making**

(30) Priority: 30.10.1998 US 183586
(71) Applicant: Premark RWP Holdings, Inc., Wilmington, Delaware 19801 (US)
(72) Inventor: Gonzales, James E., Temple, Texas 76502 (US); Lee, Yein Ming, Temple, Texas 76502 (US)
(74) Representative: Frohwitter, Bernhard, Dipl.-Ing.

(57) **Abstract**

An extruded article having a core member and a decorative surface member, wherein the decorative surface member has at least two planar decorative surfaces, wherein each of the planar decorative surfaces are oriented in different planes. The method includes coextruding the core member and the decorative surface member to form the article.

## Description

The present invention relates to substrates and methods of making such substrates. In another aspect, the present invention relates to construction materials and methods of making such materials. In even another aspect, the present invention relates to decorative construction materials and methods of making such materials. In still another aspect, the present invention relates to extruded decorative construction materials and methods of making such materials. In yet another aspect, the present invention relates to extruded prefabricated countertop and backsplash units, and methods of making such units. In even still another aspect, the present invention relates to extruded decorative materials having decorative surfaces in different planes, and to methods of making such materials. In even yet another aspect, the present invention relates to extruded integral kitchentop/backsplash units, and to methods of making such units.

In many instances, kitchen countertops are generally installed at the home construction site, with a backsplash then added to the wall after installation of the counter top. This two step installation process is labor intensive. The seam between the two pieces cannot be hidden, only minimized, if the materials are decorative laminates. In the case of solid surfacing materials, a skillful installer can make the seam appear seamless, but the seam is labor intensive and none-the-less a weak spot between the backsplash and countertop.

While some prefabricated countertop and backsplash units are available, these are generally assembled by combining a countertop and backsplash together in a somewhat labor intensive process.

There is a need in the art for a preformed integral kitchentop and backsplash unit which may be readily installed.

There is another need in the art for a method of making a preformed integral kitchentop and backsplash unit which may be readily installed.

These and other needs in the art will become apparent to those of skill in the art upon review of this specification, including its drawings and claims.

It is an object of the present invention to provide for a preformed integral kitchentop and backsplash unit which may be readily installed.

It is another object of the present invention to provide for a method of making a preformed integral kitchentop and backsplash unit which may be readily installed.

These and other objects of the present invention will become apparent to those of skill in the art upon review of this specification, including its drawings and claims.

According to one embodiment of the present invention, there is provided a method of extruding an article comprising the step of coextruding a core member and a decorative surface member, wherein the decorative surface member comprises at least two planar decorative surfaces, and wherein each of the planar decorative surfaces are oriented in different planes.

According to another embodiment of the present invention, there is provided a method of forming a countertop and backsplash unit. The method generally includes coextruding a core member and a decorative surface member to form the unit. In the final unit, the decorative surface member forms both the planar countertop decorative surface and the planar backsplash decorative surface, which countertop and backsplash surfaces are oriented in different planes.

According to even another embodiment of the present invention, there is provided an extruded article comprising a core member and a decorative surface member, wherein the decorative surface member comprises at least two planar decorative surfaces, and wherein each of the planar decorative surfaces are oriented in different planes.

According to still another embodiment of the present invention, there is provided an extruded kitchentop and backsplash unit. The unit generally includes coextruded core and decorative surface members. The decorative surface forms the planar countertop decorative surface and the planar backsplash decorative surface, with the countertop and backsplash oriented in different planes.

These and other embodiments of the present invention will become apparent to those of skill in the art upon review of this specification, including its drawings and claims.
FIG. 1 is a plot of density vs. weight percent blowing agent as discussed in Example 2.
FIG. 2 is a graph of thermal expansion for various compositions as discussed in Example 2.
FIG. 3 is a plot of tensile strain vs. weight percent blowing agent as discussed in Example 2.
FIG. 4 is a plot of flexural strain vs. weight percent blowing agent as discussed in Example 2.
FIGs. 5-9 are plots of log shear viscosity vs. log shear rate for various samples as discussed in Example 3.
FIGs. 10 and 12 are side and isometric views, respectively, of one embodiment of the integral countertop/backsplash unit 100 of the present invention showing decorative surface member 5 and core member 7, planar backsplash 10 oriented an angle Θ from planar countertop 20, which is oriented an angle Φ from planar front lip 30.
FIG. 11 is a side view of intergral countertop/backsplash 101, a slight variation to countertop 100 of FIGs. 10 and 12, showing decorative surface member 5 and core member 7, planar backsplash 10 oriented an angle Θ from planar countertop 20, which is oriented an angle Φ from planar front lip 30, and showing planar backsplash lip 11 oriented an angle β from backsplash 10.
FIG. 13 is a side view of intergral countertop/backsplash 102, a slight variation to countertop 100 of FIGs. 10 and 12, showing decorative surface member 5 and core member 7, planar backsplash 10 oriented an angle Θ from planar countertop 20.
FIG. 14 is a side view of intergral countertop/backsplash 101, a slight variation to countertop 100 of FIGs. 10 and 12, showing decorative surface member 5 and core member 7, planar backsplash 10 oriented an angle Θ from planar countertop 20, which is oriented an angle Φ from planar front lip 30, showing planar backsplash lip 11 oriented an angle β from backsplash 10, and showing planar front lip support 31 oriented an angle α from front lip 30.

The method of the present invention generally includes coextrusion of a core member and a decorative surface member into the desired shape. Additional optional layers may be inserted between the core member and the decorative surface member, on the back of the core member, or on the decorative surface member. It should be understood that backing layers or overlay layers may be coextruded with the core and decorative surface member, or applied after the extrusion step by any suitable methods.

The present invention is useful for forming integral units having surfaces in various geometric planes. For example, thee present invention is useful in making a prefabricated integral kitchen counter top and backsplash unit, in which the counter top and the backsplash are in different geometric planes, that is, generally oriented 90 degrees relative to each other. Additionally, the front edge of the counter top may have a lip oriented generally 90 degrees relative to the counter top.

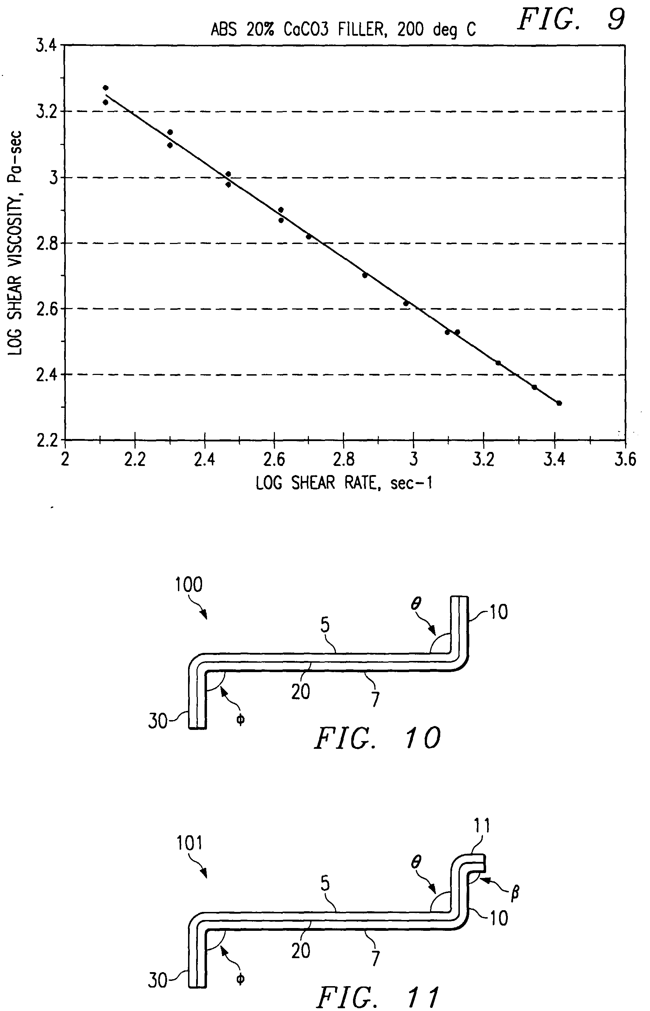

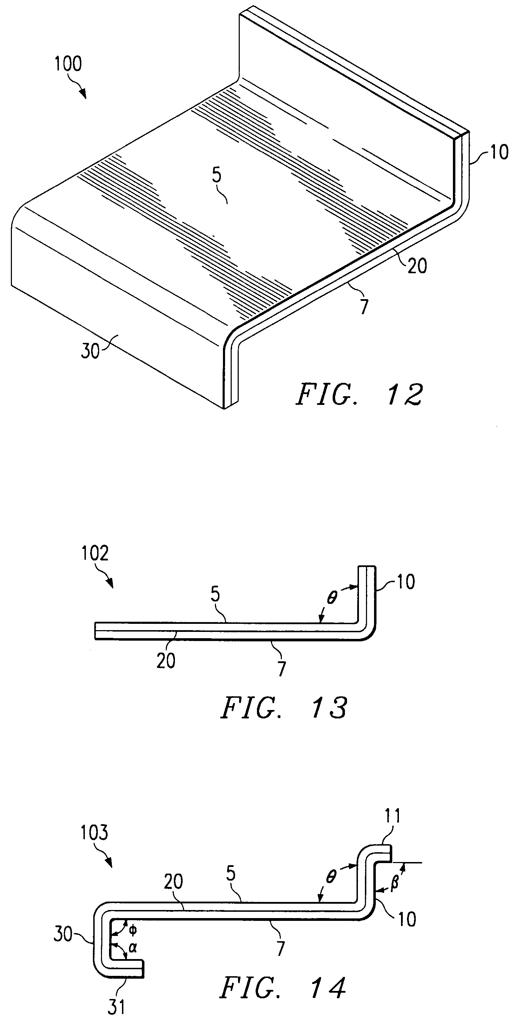

For example, referring now to FIGs. 10 and 12 there are shown side and isometric views, respectively, of one embodiment of the integral countertop/backsplash unit 100 of the present invention, showing decorative surface member 5 and core member 7, planar backsplash 10 oriented an angle Θ from planar countertop 20, which is oriented an angle Φ from planar front lip 30.

As another embodiment, FIG. 11 shows a side view of intergral countertop/backsplash 101, a slight variation to countertop 100 of FIGs. 10 and 12, showing decorative surface member 5 and core member 7, planar backsplash 10 oriented an angle Θ from planar countertop 20, which is oriented an angle Φ from planar front lip 30, and showing planar backsplash lip 11 oriented an angle β from backsplash 10.

As even another embodiment, in FIG. 13 there is shown is a side view of intergral countertop/backsplash 102, a slight variation to countertop 100 of FIGs. 10 and 12, showing decorative surface member 5 and core member 7, planar backsplash 10 oriented an angle Θ from planar countertop 20.

As still another embodiment, in FIG. 14 there is shown a side view of intergral countertop/backsplash 101, a slight variation to countertop 100 of FIGs. 10 and 12, showing planar backsplash 10 oriented an angle Θ from planar countertop 20, which is oriented an angle Φ from planar front lip 30, showing decorative surface member 5 and core member 7, planar backsplash lip 11 oriented an angle β from backsplash 10, and showing planar front lip support 31 oriented an angle α from front lip 30.

In the above embodiments, angles α, β, Θ, and Φ may be any angle desired necessary to form the desired shape of the unit. In most cases, the counter top and backsplash are oriented about 90° relative to each other, but instances can be envisioned in which it is desired to "lean" (or tilt) the backsplash either away from or toward the counter top. In most cases, these angles α, β, Θ, and φ, will be in the range of about 40° to about 140°, preferably in the range of about 60° to about 120°, more preferably in the range of about 80° to about 100°, even more preferably in the range of about 85° to about 95°, and still more preferably about 90°.

If the unit is formed by coextrusion, the preferred method, each of the decorative surfaces will be oriented in the machine direction, and of course, parallel to each other.

The decorative surface member may comprise any suitable thermoplastic which is suitable for use as a solid surfacing member. Preferably, the decorative surface member of the present invention will comprise a polyacrylic. Suitable polyacrylics include those utilized commercially in the making of solid surface materials such as Gilbralter® solid surface materials available from Wilsonart International, Inc. of Temple, Texas. Other suitable plastic-based surfacing compositions includes those described in U.S. Patent Nos. 4,085,246, 4,458,039, 4,533,680, 4,938,825 and 5,318,737, incorporated herein by reference.

It is known in the art to utilize fillers with plastic surfacing compositions. Thus, in the present invention, the decorative surface member may comprise one or more fillers as are known to those of skill in the art, in order to obtain desired physical properties.

Suitable fillers for use with the decorative surfacing material include acid acceptors, antiblocking agents, antistatic agents, antioxidants, blowing agents, crystallization aids, dyes, flame retardants, fillers, impact modifiers, mold release agents, oils, other polymers, pigments, processing agents, reinforcing agents, slip agents, stabilizers, UV resistance agents, and the like. Preferred fillers include calcium carbonate, talc, silica, glass fibers, alumina and wollastonite, with the more preferred being calcium carbonate and wollastonite, and the most preferred being wollastonite.

Fillers suitable for use with the decorative surfacing material also include surface treated fillers. Most preferably, the filler is surface treated calcium carbonate.

Non-limiting examples of reinforcing agents include inorganic or organic products of high molecular weight, including glass fiber, asbestos, boron fibers, carbon and graphite fibers, whiskers, quartz and silica fibers, and synthetic organic fibers.

When such conventional ingredients are utilized, they will generally be present in a range from about 0.01 to about 50 weight percent of the total weight of the decorative surfacing member, preferably in a range from about 1 to about 25 weight percent of the total weight of the decorative member.

The core member of the present invention may be prepared from any suitable extrudable thermoplastic, so long as it has the structural and mechanical properties necessary for the end use desired. In particular, it is preferred that the substrate have a compression set that is approximately the same or better than conventional medium or high density fiberboard or particle board (wherein compression set is measured in accordance with ASTM F970, as thickness decrease as a function of compressive stress). Preferably this thickness decrease at 2000 psi is at most 0.01 in., more preferably at most 0.005 in., and most preferably at most 0.00 1 in.

Preferably, the core member comprises one or more members selected from the group consisting of poly(acrylonitrile/butadiene/styrene) (hereafter referred to as ABS) resins such as flame retardant ABS resins and glass filled ABS resins; polycarbonate; high impact polystyrene (HIPS), polystyrene, polyphenylene oxide (PPO), and polyvinyl chloride (PVC). The polymer can be virgin polymer or recycled polymer. Preferably, the core member is prepared from a commingled resin system containing, but not limited to, one or more of the above listed polymers. Further, these polymers can be filled or unfilled, although from an impact resistance and physical property standpoint, the filled polymers are best. In a most preferred embodiment, the polymer is obtained from reclaimed plastic casings and parts from electronics equipment, such as computers, printers, televisions, stereos, etc. This reclaimed plastic is obtained by removal of substantially all ferrous-based metals and other non-plastic parts from the electronics equipment, followed by granulation of the plastic. Within the context of the present invention, the term "substantially" means >95% of the original amount of ferrous based metals and other non-plastic parts in the electronics equipment, preferably >99% of the original amount. The reclaimed plastic is normally a mixture of two or more of the above noted preferred polymers, with 50% or more, preferably 75% or more, being ABS, with or without flame retardant or glass fillers.

The polymer used in preparing the core member of the present invention can be foamed using any conventional blowing agent, such as exothermic blowing agents, endothermic blowing agents or combinations thereof, so long as the cell size of the foam can be adjusted to provide the structural and mechanical properties required in the desired end use. The preparation of foamed polymers is known in the art and is described, for example, in the above-noted Kirk Othmer Encyclopedia of Chemical Technology and "Handbook of Polymeric Foams and Foam Technology."

Preferred exothermic blowing agents include azodicarbonamide blowing agents. The exothermic blowing agents tend to provide a larger cell size in the foam produced than the endothermic blowing agents. A preferred endothermic blowing agent is a combination of calcium carbonate (or bicarbonate) and carboxylic acid. Suitable carboxylic acids are known in the art of foam making and must be capable of helping initiate formation of CO₂ from the calcium carbonate or bicarbonate. Such carboxylic acids include, but are not limited to, acids such as citric acid. In high load end uses, such as laminate flooring, the use of only an exothermic blowing agent tends to provide a foam with insufficient resistance to compression due to the oversized cells. While the use of an endothermic blowing agent alone requires larger amounts of the blowing agent (thus increasing materials and processing costs), without the ability to generate the density reduction sufficient to reduce the overall weight of the foam to a desired level for handleability. Thus, in a preferred embodiment of the present invention, the blowing agent is a combination of an exothermic blowing agent and an endothermic blowing agent. In particular, the most preferred blowing agent is a combination of an azodicarbonamide blowing agent and CaCO₃ (or bicarbonate)/carboxylic acid. The determination of the amount of blowing agent needed and ratio of endothermic/exothermic blowing agents is within the skill of one of ordinary skill in the art of polymer foam preparation and depends on the final foam properties desired. Preferably, the blowing agent is used in an amount of up to 3% of the polymer, more preferably from 1 to 2% by weight of the polymer.

The polymer for the core member may be utilized alone or with fillers, in order to obtain desired physical properties.

Suitable fillers for use with the core member include acid acceptors, antiblocking agents, antistatic agents, antioxidants, blowing agents, crystallization aids, dyes, flame retardants, fillers, impact modifiers, mold release agents, oils, other polymers, pigments, processing agents, reinforcing agents, slip agents, stabilizers, UV resistance agents, and the like. Preferred fillers include calcium carbonate, talc, silica, glass fibers, alumina and wollastonite, with the more preferred being calcium carbonate and wollastonite, and the most preferred being calcium carbonate.

Fillers suitable for use with the core member also include surface treated fillers. Most preferably, the filler is surface treated calcium carbonate.

Non-limiting examples of reinforcing agents include inorganic or organic products of high molecular weight, including glass fiber, asbestos, boron fibers, carbon and graphite fibers, whiskers, quartz and silica fibers, and synthetic organic fibers.

When such conventional ingredients are utilized, they will generally be present in a range from about 0.01 to about 50 weight percent of the total weight of the core member, preferably in a range from about 1 to about 25 weight percent of the total weight of the core member.

Additional optional layers may be inserted between the core member and the decorative surface member, on the back of the core member, or on the decorative surface member. It should be understood that backing layers or overlay layers may be coextruded with the core and decorative surface members, or may be applied after the extrusion step by any suitable methods.

An additional layer of preferred interest includes an optical barrier layer coextruded between the core member and the decorative surface member to reduce or prevent the surface characteristics of the core member from bleeding through or showing through the decorative surface. Resins suitable for use in making such an optical barrier layer include, but are not limited to, thermoplastic acrylic polymers, acrylonitrile-butadiene-styrene copolymers (ABS), poly(vinyl chlorides) (PVC), acrylonitrile-styrene-acrylates (ASA), styrene-acrylonitriles (SAN) and polycarbonates (PC).

The following examples are provided merely to illustrate the present invention, and do not limit the scope of the claims of the present invention.

Various ingredients as listed in Table 1 were combined into samples as listed in Tables 2 and 3. Prior to use, the ABS was dried, either in a dessicant drier for 2 hours at 80C or hot air oven for 4 hours at 80C. Using a twin screw extruder, 5 sheets (having dimensions of 0.250 mils thickness, 2.5 inches width, and 48 inches length) was extruded from each of these samples.

**TABLE 1**

| **number** | **material** | **form** | **melt temp. (C)** | **handling issues** |
|---|---|---|---|---|
| 0 | virgin ABS (Cyclone T1000) | pellet | 175 | ABS decomposes at 290C |
| 1 | Blowing agent (AZ 130) | pellet | | |
| 2 | Calcium carbonate | powder | | |

**TABLE 2**

| **MATERIAL** | **SAMPLE NOS.** | | | | | | | | | |
|---|---|---|---|---|---|---|---|---|---|---|
| | **1** | **2** | **3** | **4** | **5** | **6** | **7** | **8** | **9** | **10** |
| material 0: weight fraction (%) | 100 | 99 | 98 | 97 | 96 | 95 | 95 | 90 | 85 | 80 |
| material 1: weight fraction (%) | 0 | 1 | 2 | 3 | 4 | 5 | 0 | 0 | 0 | 0 |
| material 2: weight fraction (%) | | | | | | | 5 | 10 | 15 | 20 |

**TABLE 3**

| **MATERIAL** | **SAMPLE NOS.** | | | | | | | | | | | |
|---|---|---|---|---|---|---|---|---|---|---|---|---|
| | **11** | **12** | **13** | **14** | **15** | **16** | **17** | **18** | **19** | **20** | **21** | **22** |
| material 0: weight fraction (%) | 94 | 89 | 84 | 79 | 93 | 88 | 83 | 78 | 92 | 87 | 82 | 77 |
| material 1: weight fraction (%) | 1 | 1 | 1 | 1 | 2 | 2 | 2 | 2 | 3 | 3 | 3 | 3 |
| material 2: weight fraction (%) | 5 | 10 | 15 | 20 | 5 | 10 | 15 | 20 | 5 | 10 | 15 | 20 |

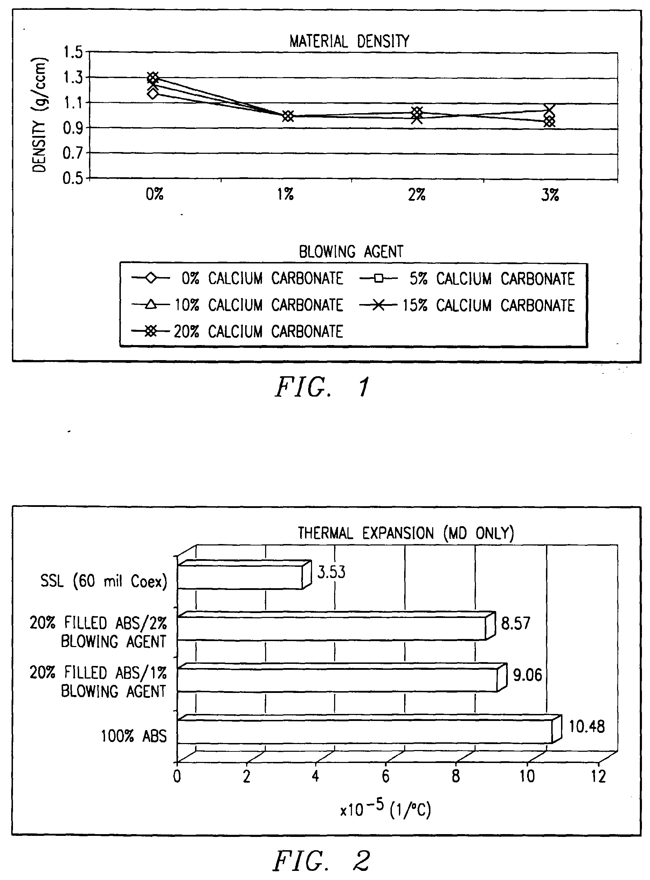

The extruded sheets of Example 1 were subjected to various tests as follows: (1) Density, (2) Ash-% filler, (3) Thermal expansion, (4) Tensile, and (5) Flexural. Results are provided in Tables 4, 5, 6 and 7, and in FIGs. 1, 2, 3 and 4.

### Material Traits

The results of testing show that variations in requested filler loading can effect the physical properties. Even with this phenomenon, density of the material when applying the blowing agent remains ≤ 1 g/ccm. Referring now to FIG. 1, it appears that above 1 wt% blowing agent, density remains relatively constant for filler loadings from 5 to 20 wt%. See, Tables 4 and 5, and FIG. 1.

### Thermal Expansion

The present invention must be useful for extruding a plastic substrate and the surfacing product into a combined countertop unit. With this in mind, both the substrate and the surfacing material must have relatively close physical characteristics. For example, to minimize the possibility of delamination, the thermal expansion of the plastic substrate and the surfacing product must be relatively close. Referring now to FIG. 2, the thermal expansion of the ABS substrate (filled or unfilled) is approximately 2 ½ times greater than the surfacing material itself. Even with 20% filler in the ABS substrate, the decrease of thermal expansion was minimal. See Table 4, and FIG. 2.

### Tensile & Flexural Strength

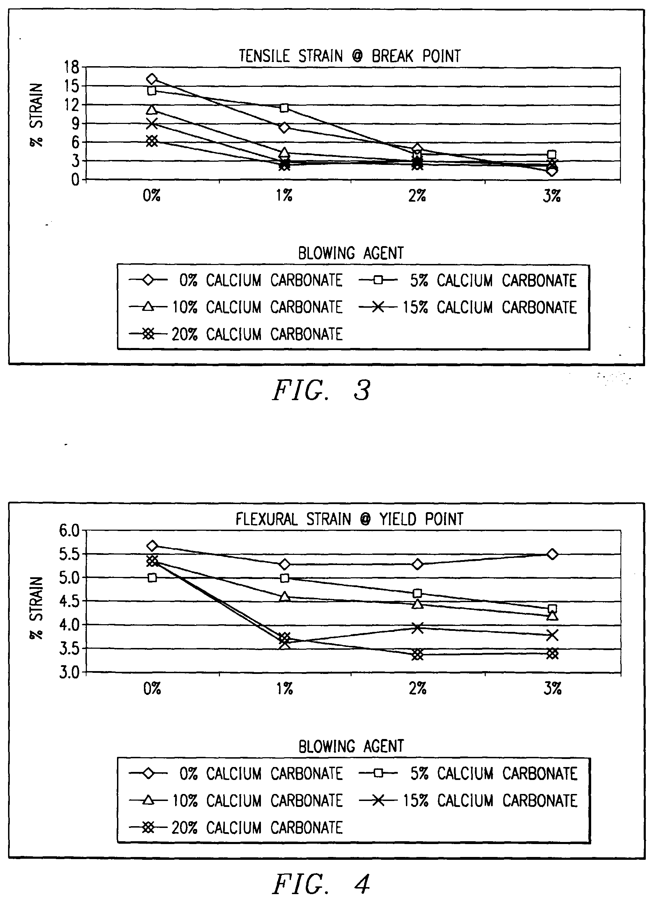

Physical strength and endurance of the various ABS substrates were evaluated in a tensile and flexural mode. At 10% - 20% filler loading with 1-3% blowing agent, the tensile strength is relatively constant across the board. See Tables 4 and 6, and FIG. 3.

Flexural data was obtained using an Instron testing apparatus (200-lb load cell & small-scale 3-point bend fixture). For accuracy of data input, calculations such as 1% yield offsets were entered for confirmation of values. These 1% offset values subsequently show very little or no differences in comparison with initial yield point values. Standard deviations and coefficient of variation values are listed for verification.

In testing the various ABS formulations, it appears that these formulations were tremendously elastic in a 3-point bending mode. Break point values were not apparent due to the extreme flexibility of the ABS polymer even with filler loading of 20%, therefore yield point values were utilized. For any given formulation, the flexural strain varies slightly in the range of 1-3 wt% blowing agent. See Tables 4 and 7, and FIG. 4.

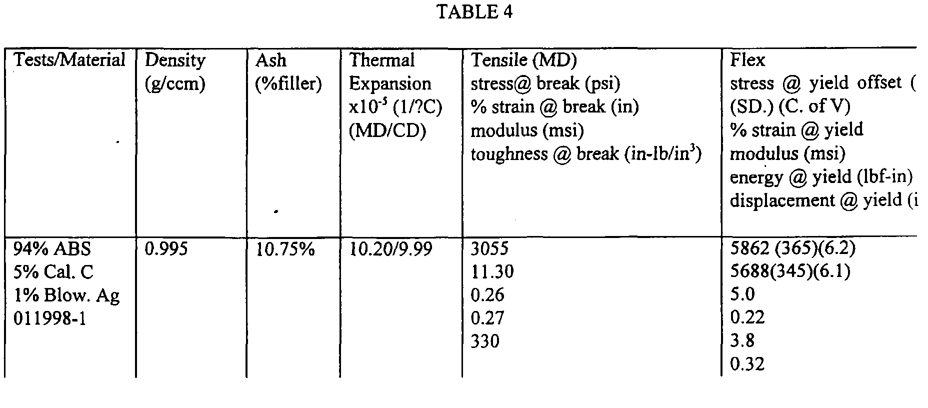

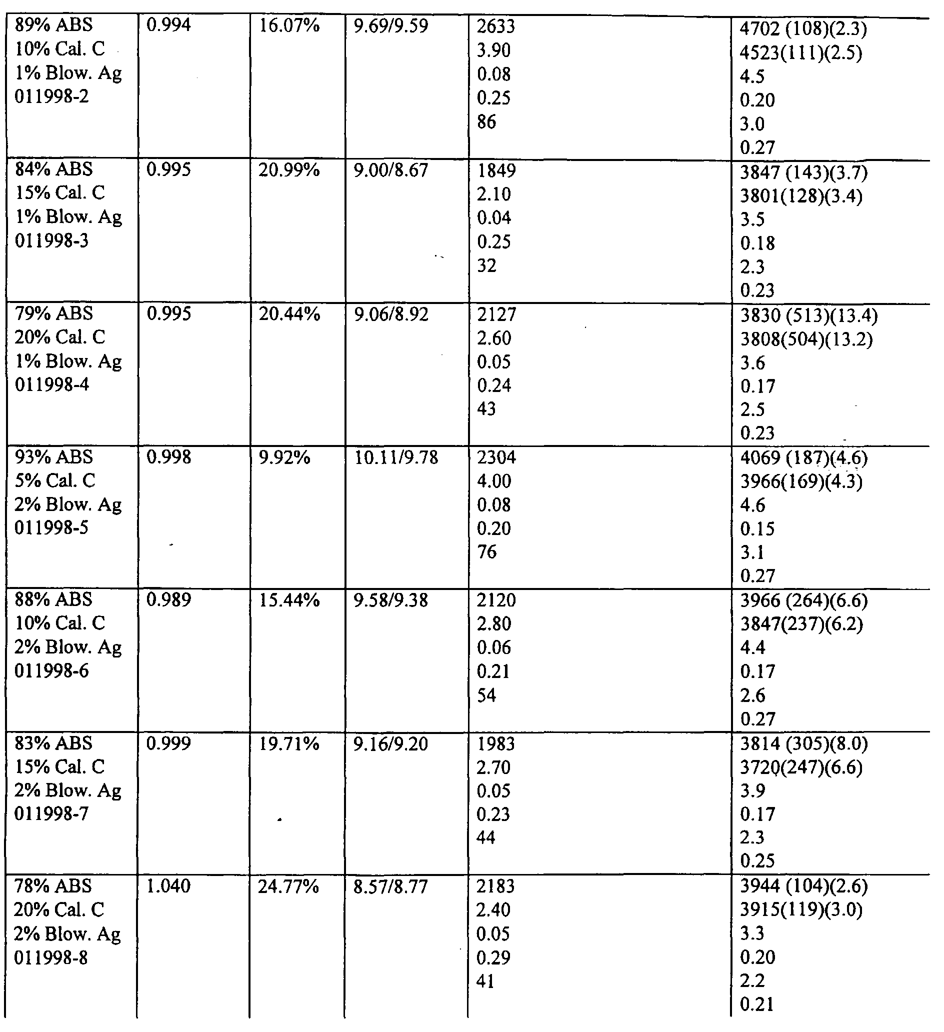

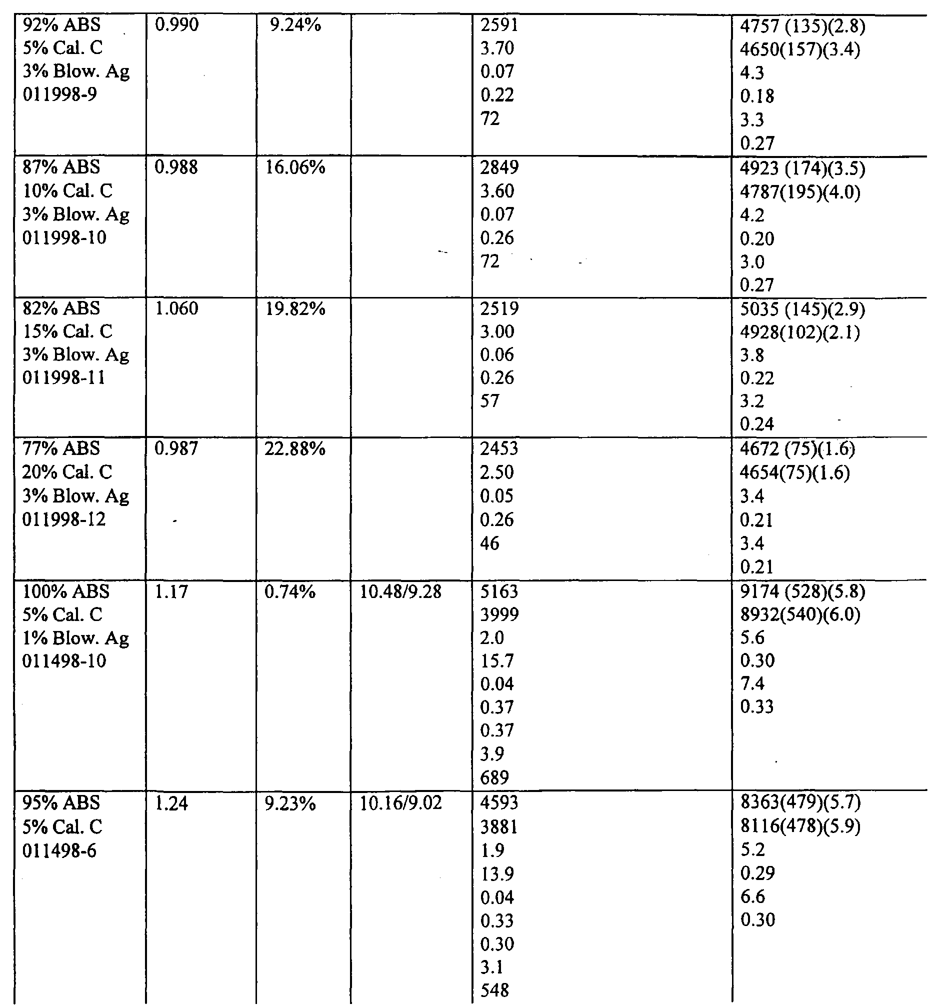

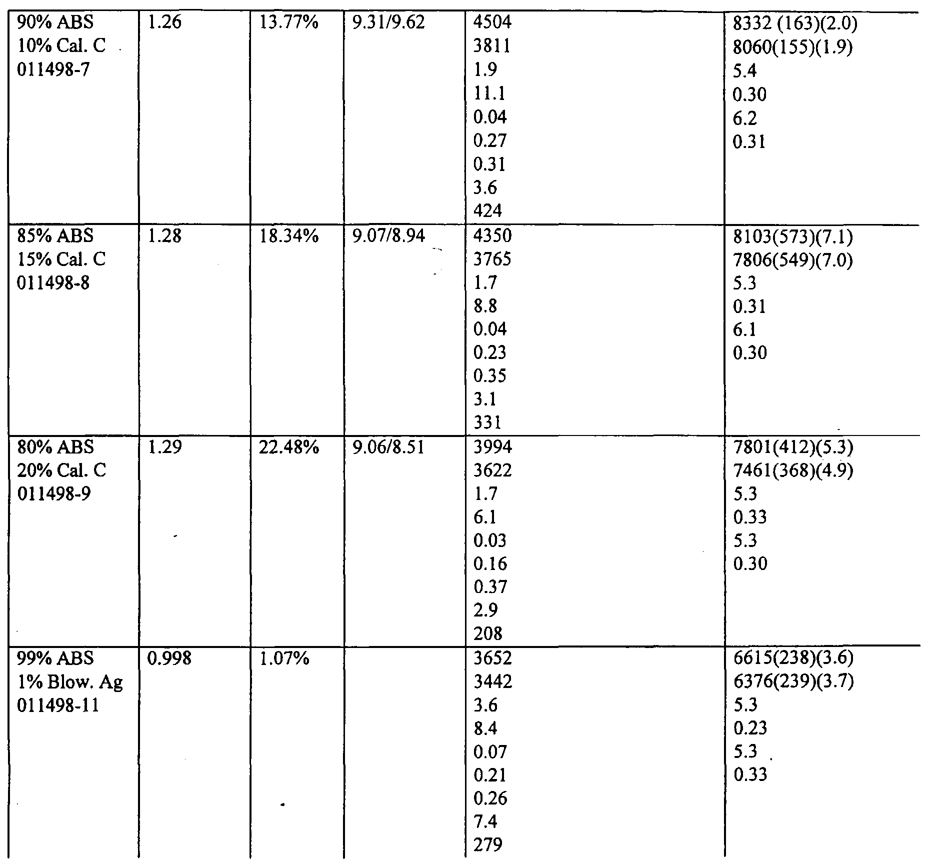

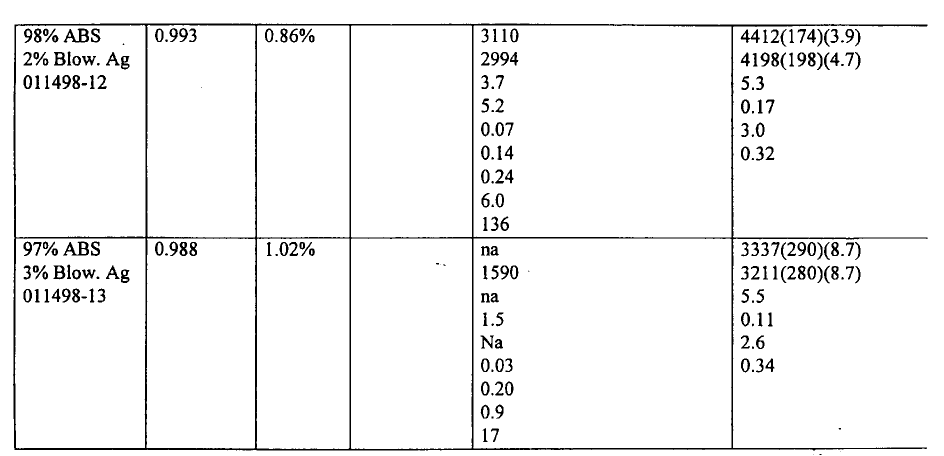

**TABLE 5**

| Density (g/ccm) | | | | | |
|---|---|---|---|---|---|
| Calcium | | 0% | 1% | 2% | 3% |
| | 0% | 1.170 | 0.998 | 0.993 | 0.988 |
| | 5% | 1.240 | 0.995 | 0.998 | 0.990 |
| | 10% | 1.260 | 0.994 | 0.989 | 0.988 |
| | 15% | 1.280 | 0.995 | 0.999 | 1.060 |
| | 20% | 1.290 | 0.995 | 1.040 | 0.987 |

**TABLE 6**

| Tensile Strain @ Break Point | | | | | |
|---|---|---|---|---|---|
| Calcium | | 0% | 1% | 2% | 3% |
| | 0% | 15.7 | 8.4 | 5.2 | 1.5 |
| | 5% | 13.9 | 11.3 | 4.0 | 3.7 |
| | 10% | 11.1 | 3.9 | 2.8 | 3.6 |
| | 15% | 8.8 | 2.1 | 2.7 | 3.0 |
| | 20% | 6.1 | 2.6 | 2.4 | 2.5 |

**TABLE 7**

| Flexural Strain @ Yield Point | | | | | |
|---|---|---|---|---|---|
| Calcium | | 0% | 1% | 2% | 3% |
| | 0% | 5.6 | 5.3 | 5.3 | 5.5 |
| | 5% | 5.0 | 5.0 | 4.6 | 4.3 |
| | 10% | 5.2 | 4.5 | 4.4 | 4.2 |
| | 15% | 5.4 | 3.5 | 3.9 | 3.8 |
| | 20% | 5.3 | 3.6 | 3.3 | 3.4 |

### Example 3

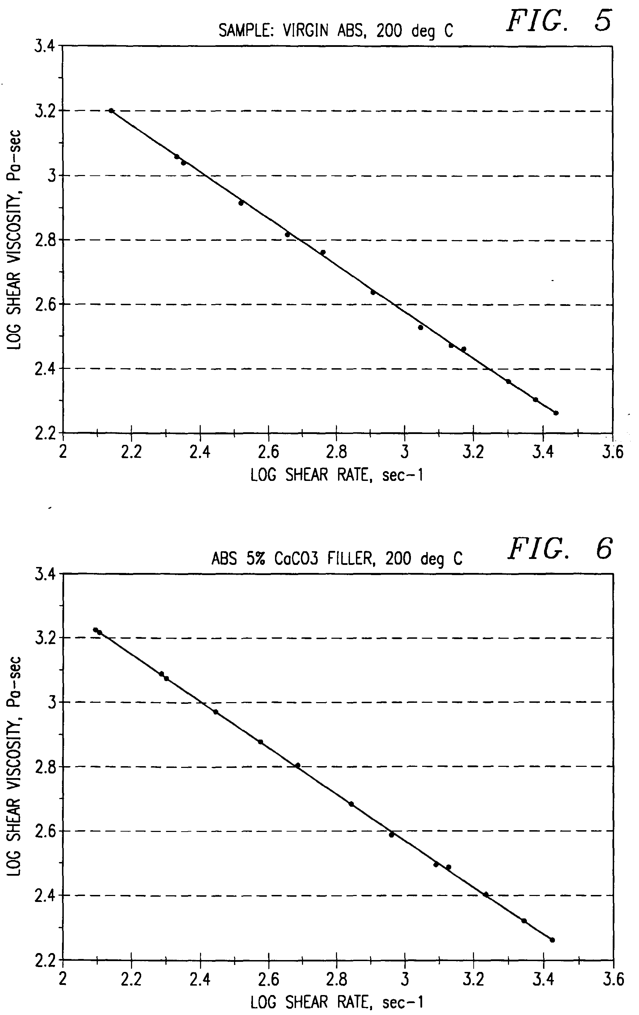

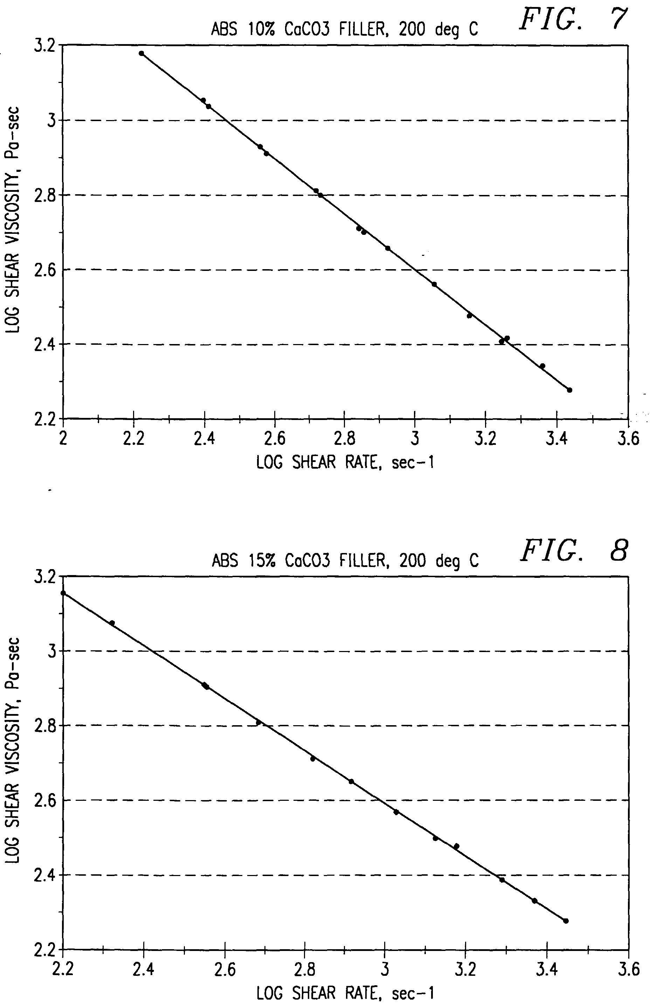

Samples 1, 7, 8, 9, and 10 of Example 1 were subjected to rheology analysis by capillary rheometry at 200°C. A plot of log of the shear viscosity vs. the log of the shear rate was generated and a power law equation determined. See FIGs. 5-9, and Table 8.

**TABLE 8**

| **Sample** | **Temperature (C)** | **Line Equation** | **Corr. Coeff.** |
|---|---|---|---|
| ABS, 0% Filler | 200 | -0.717 log shear rate + 4.7123 | 0.999 |
| ABS, 5% Filler | 200 | -0.716 log shear rate + 4.7213 | 0.999 |
| ABS, 10% Filler | 200 | -0.7181 log shear rate + 4.7398 | 0.999 |
| ABS, 15% Filler | 200 | -0.7178 log shear rate + 4.7406 | 0.999 |
| ABS, 20% Filler | 200 | -0.7452 log shear rate + 4.8413 | 0.998 |

While the present invention has been illustrated mainly by reference to a kitchen counter top and backsplash unit, it should be understood that it has utility in any application in which it is desired to have an article with two or more decorative surfaces in different planes. Non-limiting examples of such other applications include building modules, furniture, and bathroom vanities.

While the illustrative embodiments of the invention have been described with particularity, it will be understood that various other modifications will be apparent to and can be readily made by those skilled in the art without departing from the spirit and scope of the invention. Accordingly, it is not intended that the scope of the claims appended hereto be limited to the examples and descriptions set forth herein but rather that the claims be construed as encompassing all the features of patentable novelty which reside in the present invention, including all features which would be treated as equivalents thereof by those skilled in the art to which this invention pertains.

## Claims

1. A method comprising coextruding a core member and a decorative surface member to form an article, wherein in the article the decorative surface member comprises at least two planar decorative surfaces, and wherein each of the planar decorative surfaces are oriented in different planes.

2. The method of claim 1, in which an optical barrier layer is coextruded between the decorative surface member and the core member.

3. The method of claim 1 or 2, further comprising applying an overlay layer to the decorative surface member or a backing layer to the core member.

4. The method according to any of the preceding claims, wherein the planar decorative surfaces are oriented relative to each other at an angle Θ in the range of 40° to 140°.

5. The method according to any of the preceding claims, wherein the article comprises first, second and third planar decorative surfaces, wherein each of the planar decorative surfaces are oriented in different planes, wherein the first planar decorative surface is oriented relative to the second planar surface an angle Θ in the range of 40° to 140°, and the second planar decorative surface is oriented relative to the third planar surface an angle Θ in the range of 40° to 140°.

6. The method according to claim 5, wherein the first, second and third decorative surfaces are parallel to each other.

7. The method according to any of the preceding claims, wherein the core member comprises one or more polymers selected from poly (acrylonitrile/butadiene/styrene), polycarbonate, high impact strength polystyrene, polystyrene, polyphenylene oxide (PPO), and polyvinyl chloride (PVC), and the decorative surface member comprises polyacrylic.

8. The method according to any of the preceding claims, wherein the core member and the decorative surface member each comprise one or more fillers independently selected from acid acceptors, antiblocking agents, antistatic agents, antioxidants, blowing agents, crystallization aids, dyes, flame retardants, fillers, impact modifiers, mold release agents, oils, other polymers, pigments, processing agents, reinforcing agents, slip agents, stabilizers, and UV resistance agents.

9. The method according to any of the preceding claims, wherein the core member comprises poly (acrylonitrile/butadiene/styrene), calcium carbonate and blowing agent, and the decorative surfacing member comprises polyacrylic.

10. A method of forming a countertop and backsplash unit, the method comprising, coextruding a core member and a decorative surface member to form the unit, wherein in the unit the decorative surface member comprises a planar countertop decorative surface and a planar backsplash decorative surface, and wherein the countertop and the backsplash are oriented in different planes.

11. The method according to claim 10, in which an optical barrier layer is coextruded between the decorative surface member and the core member.

12. The method according to either of claims 10 or 11, further comprising applying an overlay layer to the decorative surface member or a backing layer to the core member.

13. The method according to any of claims 10 to 12, wherein the planar decorative surfaces are oriented relative to each other an angle Θ in the range of 80° to 100°.

14. The method according to any of claims 10 to 13, wherein the article comprises first, second and third planar decorative surfaces, wherein each of the planar decorative surfaces are oriented in different planes, wherein the first planar decorative surface is oriented relative to the second planar surface an angle Θ in the range of 85° to 95°, and the second planar decorative surface is oriented relative to the third planar surface an angle Θ in the range of 85° to 95°.

15. The method according to any of claims 10 to 14, wherein the core member comprises poly (acrylonitrile/butadiene/styrene), calcium carbonate and blowing agent, and the decorative surfacing member comprises polyacrylic.

16. An extruded article comprising a core member and a decorative surface member, wherein the decorative surface member comprises at least two planar decorative surfaces, and wherein each of the planar decorative surfaces are oriented in different planes.

17. The extruded article according to claim 16, in which an optical barrier layer is coextruded between the decorative surface member and the core member.

18. The extruded article according to either of claims 16 or 17, further comprising an overlay layer on the decorative surface member or a backing layer on the core member.

19. The extruded article according to any of claims 16 to 18, wherein the planar decorative surfaces are oriented relative to each other at an angle Θ in the range of 60° to 120°.

20. The extruded article according to any of claims 16 to 19, wherein the article comprises first, second and third planar decorative surfaces, wherein each of the planar decorative surfaces are oriented in different planes, wherein the first planar decorative surface is oriented relative to the second planar surface at an angle Θ in the range of 60° to 120°, and the second planar decorative surface is oriented relative to the third planar surface an angle Φ in the range of 60° to 120°.

21. The extruded article according to claim 20, wherein the first, second and third decorative surfaces are parallel to each other.

22. The extruded article according to any of claims 16 to 21, wherein the core member comprises one or more polymers selected from poly (acrylonitrile/butadiene/styrene), polycarbonate, high impact strength polystyrene, polystyrene, polyphenylene oxide (PPO), and polyvinyl chloride (PVC), and the decorative surface member comprises polyacrylic.

23. The extruded article according to any of claims 16 to 22, wherein the core member and the decorative surface member each comprise one or more fillers independently selected from acid acceptors, antiblocking agents, antistatic agents, antioxidants, blowing agents, crystallization aids, dyes, flame retardants, fillers, impact modifiers, mold release agents, oils, other polymers, pigments, processing agents, reinforcing agents, slip agents, stabilizers, and UV resistance agents.

24. The extruded article according to any of claims 16 to 23, wherein the core member comprises poly (acrylonitrile/butadiene/styrene), calcium carbonate and blowing agent, and the decorative surfacing member comprises polyacrylic.

25. An extruded kitchen top and backsplash unit, comprising a coextruded core member and a decorative surface member, wherein the decorative surface member comprises a planar countertop decorative surface and a planar backsplash decorative surface, and wherein the countertop and the backsplash are oriented in different planes.

26. The extruded unit according to claim 25, in which an optical barrier layer is coextruded between the decorative surface member and the core member.

27. The extruded unit according to either of claims 25 or 26, further comprising an overlay layer on the decorative surface member or a backing layer on the core member.

28. The extruded unit according to any of claims 25 to 27, wherein the planar decorative surfaces are oriented relative to each other an angle Θ in the range of 60° to 120°.

29. The extruded unit according to any of claims 25 to 28, wherein the article comprises first, second and third planar decorative surfaces, wherein each of the planar decorative surfaces are oriented in different planes, wherein the first planar decorative surface is oriented relative to the second planar surface an angle Θ in the range of 85° to 95°, and the second planar decorative surface is oriented relative to the third planar surface an angle Θ in the range of 85° to 95°,

30. The extruded unit according to any of claims 25 to 29, wherein the core member is comprises poly (acrylonitrile/butadiene/styrene), calcium carbonate and blowing agent, and the decorative surfacing member comprises polyacrylic.
